# EUROPÄISCHE PATENTSCHRIFT

(11) **EP 4 072 787 B1**
(45) Veröffentlichungstag und Bekanntmachung des Hinweises auf die Patenterteilung: **01.10.2025**
(21) Anmeldenummer: 20808459.0
(22) Anmeldetag: 25.11.2020
(51) Int. Cl.: B25F 5/00, B24B 23/02, B23Q 11/00

(54) **ELEKTROWERKZEUGGERÄT MIT EINEM ROTIERENDEN WERKZEUG**
ELECTRIC POWER TOOL WITH A MOTOR AND A ROTATING TOOL
APPAREIL OUTIL ÉLECTRIQUE DOTÉ D'UN MOTEUR ET D'UN OUTIL ROTATIF

(30) Priorität: 11.12.2019 EP 19215269
(43) Veröffentlichungstag der Anmeldung: 19.10.2022
(73) Patentinhaber: Hilti Aktiengesellschaft, 9494 Schaan (LI)
(72) Erfinder: HOLZMEIER, Georg, 86748 Marktoffingen (DE); SATTLER, Christian, 87640 Biessenhofen (DE); GREITMANN, Ralf, 86916 Kaufering (DE)
(74) Vertreter: Hilti Aktiengesellschaft Corporate Intellectual Property
(86) Internationale Anmeldenummer: PCT/EP2020/083308
(87) Internationale Veröffentlichungsnummer: WO 2021/115781

(56) Entgegenhaltungen:
- EP-A1- 3 391 993
- US-A1- 2005 224 325
- US-A1- 2015 209 950
- US-A1- 2015 282 337
- US-A1- 2017 232 565
- US-A1- 2019 070 721
- US-A1- 2019 319 563

## Beschreibung

Die vorliegende Erfindung betrifft ein Elektrowerkzeuggerät mit einem rotierenden Werkzeug. Das Elektrowerkzeug ist dadurch gekennzeichnet, dass eine Drehrichtung des Werkzeugs an dem Elektrowerkzeuggerät in Abhängigkeit von einem Betriebszustand des Elektrowerkzeuggeräts einstellbar ist. Die automatische Einstellbarkeit der Drehrichtung des Elektrowerkzeugs bei Verwendung eines bürstenlosen Motors ist mit dem Vorteil verbunden, dass kein Getriebe für die Änderung der Drehrichtung, wie bei einem Verbrennungsmotor, erforderlich ist. Darüber hinaus kann die Nutzerfreundlichkeit des Elektrowerkzeuggeräts für den Nutzer wesentlich verbessert werden, da sich der Nutzer praktisch nicht mehr um das Einstellen einer "richtigen" Drehrichtung des Werkzeugs kümmern muss. In einem weiteren Aspekt betrifft die Erfindung ein Verfahren zum Betrieb eines Elektrowerkzeuggeräts mit einem rotierenden Werkzeug, wobei die Drehrichtung des Werkzeugs an dem Elektrowerkzeuggerät insbesondere in Abhängigkeit davon eingestellt wird, ob ein Sauggerät an dem Elektrowerkzeuggerät angeschlossen ist oder nicht.

### Hintergrund der Erfindung:

Im Stand der Technik sind Elektrowerkzeuggeräte bekannt, mit denen Oberflächen bearbeitet oder Untergründe durchtrennt werden können. Diese Elektrowerkzeuggeräte weisen üblicherweise ein rotierendes Werkzeug auf, wie beispielsweise eine Trennscheibe, ein Schneidblatt oder ein Trennblatt. Die aus dem Stand der Technik bekannten Elektrowerkzeuggeräte sind zumeist dadurch gekennzeichnet, dass bei ihnen eine fest definierte Drehrichtung des Werkzeugs vorgegeben ist. Diese Drehrichtung des Werkzeugs kann im Sinne der Erfindung bevorzugt auch als Rotationsrichtung bezeichnet werden. Die fest vorgegebene Drehrichtung des Werkzeugs des Elektrowerkzeuggeräts schränkt allerdings die Nutzerfreundlichkeit des Elektrowerkzeuggeräts dahingehend stark ein, dass das Elektrowerkzeuggerät nur für bestimmte Anwendungsfälle gut eingesetzt werden kann, nämlich für diejenigen Aufgaben, die mit der vorgegebenen Rotationsrichtung des Werkzeugs besonders gut erledigt werden können. Für alle anderen Aufgaben kann die Arbeit mit einem konventionellen Elektrowerkzeuggerät mit fest vorgegebener Drehrichtung des Werkzeugs unter Umständen sehr anstrengend oder beispielsweise mit einer hohen Staubexposition des Nutzers verbunden sein.

Es sind im Stand der Technik allerdings bereits einige Geräte bekannt, bei denen den Nutzer eine Drehrichtung des Werkzeugs einstellen kann. Beispielsweise wird in der US 2015 282 337 A eine Werkzeugmaschine offenbart, bei der die Energiezufuhr des Elektromotors der Werkzeugmaschine durch eine elektronische Schaltervorrichtung eingestellt werden kann. In der US 2019 319 563 A wird eine weitere Werkzeugmaschine beschrieben, bei der eine Rotationsrichtung des Werkzeugs eingestellt werden kann, wobei zwischen einer Vorwärts- und Rückwärtsrichtung unterschieden werden kann. Nachteilig an den im Stand der Technik beschriebenen Werkzeugmaschinen ist, dass die Einstellung der Drehrichtung des Werkzeugs zumeist manuell durch einen Nutzer erfolgen muss. Dies kann dazu führen, dass die Aufmerksamkeit des Nutzers auf den Schaltvorgang gezogen wird, so dass der Nutzer weniger Aufmerksamkeit für den tatsächlichen Arbeitsvorgang zur Verfügung hat. Arbeitsfehler oder Gefährdungen des Nutzers können die Folge sein. Eine Elektrowerkzeuggerät gemäß dem Oberbegriff des Anspruchs 1 ist bereits aus der EP3391993A1 bekannt.

Aufgabe der vorliegenden Erfindung ist es, die vorstehend beschriebene Nachteile und Mängel des Standes der Technik zu überwinden und ein Elektrowerkzeuggerät mit einem Motor und einem rotierenden Werkzeug mit einer verbesserten Nutzerfreundlichkeit und einem besondere breiten Anwendungsspektrum bereitzustellen. Das bereitzustellende Elektrowerkzeuggerät soll insbesondere besonders flexibel in verschiedenen Anwendungssituationen einsetzbar sein. Dabei soll die Arbeit mit dem Elektrowerkzeuggerät in verschiedenen Anwendungsszenarien erfolgen können, ohne dass die Aufmerksamkeit des Nutzers zu stark auf eine Auswahl zwischen verschiedenen Drehrichtungen des Werkzeugs des Elektrowerkzeuggeräts gezogen wird. Die Anwendungssituationen sollen vorzugsweise eine besonders gute Absaugung des anfallenden Staubs ermöglichen oder vom Nutzer als besonders wenig ermüdend empfunden werden.

Die Aufgabe wird durch den Gegenstand der unabhängigen Ansprüche gelöst. Vorteilhafte Ausführungsformen zu dem Gegenstand des unabhängigen Anspruchs finden sich in den abhängigen Unteransprüchen.

### Beschreibung der Erfindung:

Die Aufgabe wird gelöst durch ein Elektrowerkzeuggerät nach Anspruch 1 und ein Verfahren nach Anspruch 10.

Dadurch kann vorteilhafterweise ein Elektrowerkzeuggerät mit einem rotierenden Werkzeug bereitgestellt werden, bei dem eine Drehrichtung des Werkzeugs des Elektrowerkzeuggeräts in Abhängigkeit davon eingestellt wird, ob ein Sauggerät an dem Elektrowerkzeuggerät angeschlossen vorliegt oder nicht.

Indem bei dem vorgeschlagenen Elektrowerkzeuggerät die Drehrichtung des Werkzeugs in Abhängigkeit von einem Betriebszustand des Elektrowerkzeuggeräts eingestellt werden kann, wird eine technische Möglichkeit bereitgestellt, mit der insbesondere der Aspekt der Nutzerfreundlichkeit des Elektrowerkzeuggeräts in Verbindung einem breiten Anwendungsspektrum verbessert werden kann. Insbesondere wird durch die automatische Einstellung der Drehrichtung des Werkzeugs des Elektrowerkzeuggeräts dafür Sorge getragen, dass die Einstellung nicht manuell durch den Nutzer erfolgen muss, was häufig einen hohen Anteil an Aufmerksamkeit des Nutzers bindet. Darüber hinaus kann der Betrieb des Elektrowerkzeuggeräts durch die Erfindung optimal an den Anschluss bzw. das Vorhandensein eines Sauggeräts angepasst bzw. darauf abgestimmt werden. Dies wiederum führt ferner zu einer verbesserten Absaugung von Staub aus einem Arbeitsbereich des Elektrowerkzeuggeräts. Ein Sauggerät im Sinne der Erfindung kann ein Staubsauger oder ein Entstauber sein. Es kann sich um einen Trocken-Sauger oder einen Nass-Trocken-Sauger handeln. Auch sogenannte Water Management-Systeme (WMS) können Sauggeräte im Sinne der Erfindung sein. Der Begriff "Sauggerät" ist im Sinne der Erfindung so zu verstehen, dass damit Geräte gemeint sind, die zumindest auch dazu eingerichtet sind, in Luft oder in Wasser gelösten Staub und Schutz aufzusaugen.

Mit der Erfindung wird insbesondere eine Möglichkeit bereitgestellt, bei unterschiedlichen Anwendungen des Elektrowerkzeuggeräts jeweils eine optimale Drehrichtung des Werkzeugs des Elektrowerkzeuggeräts bereitzustellen. Dies wird im Kontext der vorliegenden Erfindung insbesondere dadurch ermöglicht, dass das Elektrowerkzeuggerät vorteilhafterweise dazu eingerichtet ist, zu erkennen, ob ein Sauggerät an einer Staub- oder Schutzhaube angeschlossen vorliegt. Dazu kann das Elektrowerkzeuggerät beispielweise geeignete Erfassungsmittel umfassen. Anschließend kann die Drehrichtung des Werkzeugs des Elektrowerkzeuggeräts in Abhängigkeit davon eingestellt werden, ob ein Sauggerät bzw. ein Saugschlauchanschluss erkannt wird oder nicht. Es ist im Sinne der Erfindung , dass die Einstellung der Rotationsrichtung des Werkzeugs automatisch, d.h. ohne weiteres Zutun des Nutzers, erfolgt. Dadurch wird der Nutzer entlastet und kann sich mit voller Aufmerksamkeit der Verrichtung der mit dem Elektrowerkzeuggerät zu erledigenden Arbeit zuwenden. Es ist im Sinne der Erfindung bevorzugt, dass die Erfassungsmittel in einem Bereich des jeweiligen Anschlussrohrs für den Saugschlauch angeordnet vorliegen.

Es ist erfindungsgemäß vorgesehen, dass der Betriebszustand des Elektrowerkzeuggeräts angibt, ob ein Sauggerät an dem Elektrowerkzeuggerät angeschlossen vorliegt oder nicht. Entsprechend betrifft die Erfindung somit ein Elektrowerkzeuggerät, bei dem die Drehrichtung des Werkzeugs in Abhängigkeit davon eingestellt werden kann, ob an dem Elektrowerkzeuggerät ein Sauggerät angeschlossen vorliegt oder nicht.

Zu diesem Zweck ist es im Sinne der Erfindung, dass das Elektrowerkzeuggerät Mittel zum Erkennen eines Sauggeräts umfasst. Dabei handelt es sich bevorzugt um Mittel zur sensorischen Detektion eines Sauggeräts. Diese Mittel sind insbesondere dazu eingerichtet, den Anschluss eines Saugschlauchs eines Sauggeräts zu erkennen. Der Begriff "Saugschlauch" beschreibt im Sinne der Erfindung bevorzugt einen solchen Schlauch, mit dem beispielsweise eine Düse oder eine Einsaugvorrichtung mit einem Sauggerät verbunden werden kann. Der Fachmann kennt solche Saugschläuche, wie sie beispielsweise von handelsüblichen Haushaltsstaubsaugern bekannt sind. Im Kontext der vorliegenden Erfindung kann ein Saugschlauch dazu verwendet werden, ein Sauggerät mit dem Elektrowerkzeuggerät zu verbinden, um Staub, der bei der Arbeit mit dem Elektrowerkzeuggerät anfällt, abzusaugen. Der Saugschlauch mündet im Bereich des Elektrowerkzeuggeräts insbesondere im Bereich einer sogenannten Staubhaube, die eine breite Verteilung des anfallenden Staubs in einem großen Raum- oder Volumenbereich von vornherein verhindert. Der bei Betrieb des Elektrowerkzeuggeräts anfallende Staub wird vielmehr in der Staubhaube oder einer anderen Zubehörvorrichtung gesammelt, von wo er besonders gut und effizient abgesaugt werden kann.

Der Anschluss an die Staubhaube oder an das Elektrowerkzeuggerät kann vorzugsweise mit einer Adaptervorrichtung erfolgen, die im Sinne der Erfindung bevorzugt auch als Absaugvorrichtung bezeichnet werden kann. Diese Absaugvorrichtung kann je nach Arbeitsrichtung des Elektrowerkzeuggeräts bzw. je nach Drehrichtung des Werkzeugs des Elektrowerkzeuggeräts in Richtung des Elektrowerkzeuggeräts angeordnet vorliegen oder auf der dem Elektrowerkzeuggerät abgewandten Seite der Staub- oder Schutzhaube. Mit anderen Worten kann das Elektrowerkzeuggerät eine Absaugvorrichtung, deren Position in Abhängigkeit von einer Arbeitsrichtung des Elektrowerkzeuggeräts oder in Abhängigkeit von einer Drehrichtung des Werkzeugs des Elektrowerkzeuggeräts ausgewählt werden kann. Es ist im Sinne der Erfindung ganz besonders bevorzugt, dass die Absaugvorrichtung auf der Seite der Staubhaube angeordnet vorliegt, in die das Elektrowerkzeuggerät bewegt wird. Das bedeutet im Sinne der Erfindung bevorzugt, dass die Absaugvorrichtung vorzugsweise zwischen Staubhaube und Elektrowerkzeuggerät angeordnet vorliegt, wenn das Elektrowerkzeuggerät in ziehender Arbeitsrichtung betrieben wird und sich das Werkzeug des Elektrowerkzeuggeräts in der Drehrichtung "gegen den Uhrzeigersinn" auf der dem Elektrowerkzeuggerät abgewandten Vorderseite der Schutzhaube angeordnet vorliegt, wenn das Elektrowerkzeuggerät in schiebender Arbeitsrichtung betrieben wird und sich das Werkzeug des Elektrowerkzeuggeräts in der Drehrichtung "im Uhrzeigersinn" dreht.

Es ist im Sinne der Erfindung bevorzugt, dass an dem Elektrowerkzeuggerät ein Saugschlauchanschluss in Abhängigkeit von einer Drehrichtung des Werkzeugs des Elektrowerkzeuggeräts angeordnet ist. Mit anderen Worten ist die Anordnung bzw. die Position des Saugschlauchanschlusses davon abhängig, in welche Drehrichtung sich das Werkzeug des Elektrowerkzeuggerät dreht. Es ist im Sinne der Erfindung bevorzugt, dass sich der Saugschlauchanschluss an einem geräteseitigen Ende einer Schutzhaube des Werkzeugs des Elektrowerkzeugs befindet, wenn sich das Werkzeug gegen den Uhrzeigersinn dreht und/oder das Elektrowerkzeuggerät in einer ziehenden Arbeitsrichtung betrieben wird, während sich der Saugschlauchanschluss vorzugsweise an einem geräte-abgewandten, vorderen Ende einer Schutzhaube des Werkzeugs des Elektrowerkzeugs befindet, wenn sich das Werkzeug mit dem Uhrzeigersinn dreht und/oder das Elektrowerkzeuggerät in einer schiebenden Arbeitsrichtung betrieben wird. Mit der Erfindung kann somit eine Möglichkeit zur optimalen Anordnung eines Saugschlauchanschlusses oder einer Absaugvorrichtung im Bereich einer Schutz- oder Staubhaube eines Elektrowerkzeuggeräts bereitgestellt werden. Die Parameter, nach denen im Kontext der vorliegenden Erfindung die Position des Saugschlauchanschlusses oder der Absaugvorrichtung festgelegt wird, sind beispielsweise die Arbeitsrichtung des Elektrowerkzeugs bzw. die Drehrichtung des Werkzeugs des Elektrowerkzeuggeräts. Diese Parameter können maßgeblich für den Betriebszustand des Elektrowerkzeuggeräts sein.

Es ist im Sinne der Erfindung bevorzugt, dass die Mittel zum Erkennen eines Sauggeräts von einem mechanischen Schalter gebildet werden, wobei der mechanische Schalter vorzugsweise als Mikroschalter ausgeführt sein kann. Die Verwendung eines Mikroschalters ist insbesondere dann bevorzugt, wenn mit den Erfassungsmitteln der Anschluss eines Saugschlauches detektiert werden soll. Die Mittel zum Erkennen des Sauggeräts sind vorzugsweise dazu eingerichtet, den Anschluss eines Absaugschlauchs an einer fest angebrachten Absaugöffnung an einer Staubhaube zu erkennen. Sie können darüber hinaus dazu eingerichtet sein, Absaugzubehörteile, welche an der Staubhaube zwecks Absaugung bedarfsweise montiert werden, zu erkennen. Es ist im Sinne der Erfindung bevorzugt, dass die Erkennungsmittel Hall-Sensoren oder Magnete zum Erkennen des Vorhandenseins der genannten Vorrichtungen umfasst. Alternativ oder ergänzend können die Erfassungsmittel kapazitive und/oder induktive Sensoren zum Erkennen des Sauggeräts, des Saugschlauchanschlusses oder der Absaugzubehörteile umfassen.

Bei Elektrowerkzeuggeräten mit einer separaten Staubabsaugung, die beispielsweise als Zubehörvorrichtung ausgebildet ist, kann die Drehrichtung dann automatisch angepasst werden, wenn ein Magnet als Erfassungsmittel an der Zubehörvorrichtung oder ein Hall-Sensor als Erfassungsmittel an einem Blattschutz des Elektrowerkzeuggeräts angeordnet vorliegt.

In einem zweiten Aspekt betrifft die Erfindung ein Verfahren zum Betrieb eines Elektrowerkzeuggeräts mit einem rotierenden Werkzeug, wobei das Verfahren folgende Verfahrensschritte umfasst:
a) Bereitstellung eines Elektrowerkzeuggeräts mit einem rotierenden Werkzeug,
b) Erfassung eines Betriebszustands des Elektrowerkzeuggeräts mit Erfassungsmitteln,
c) Betrieb des Elektrowerkzeuggeräts in Abhängigkeit von dem erfassten Betriebszustand des Elektrowerkzeuggeräts, wobei der Betriebszustand angibt, ob ein Sauggerät an dem Elektrowerkzeuggerät angeschlossen vorliegt.

Es ist im Kontext des vorgeschlagenen Verfahrens vorgesehen, dass die Drehrichtung des Werkzeugs des Elektrowerkzeuggeräts in Abhängigkeit davon eingestellt wird, ob an dem Elektrowerkzeuggerät ein Sauggerät angeschlossen vorliegt bzw. ob ein Anschluss eines Sauggeräts von entsprechenden Erfassungsmitteln erkannt wird. Diese Erkennung erfolgt mit Erfassungsmitteln. Es ist im Sinne der Erfindung ganz besonders bevorzugt, dass die Erfassungsmittel insbesondere dazu eingerichtet sind als Betriebszustand des Elektrowerkzeuggeräts, zu erfassen, ob ein Sauggerät an dem Elektrowerkzeuggerät angeschlossen vorliegt. Insofern kann das Verfahren auch als Verfahren zur Einstellung einer Drehrichtung des Werkzeugs eines Elektrowerkzeuggeräts in Abhängigkeit einer Erkennung eines Sauggeräts bezeichnet werden. Mit anderen Worten wird im Kontext der vorliegenden Erfindung eine Drehrichtung des Werkzeugs des Elektrowerkzeuggeräts in Abhängigkeit davon eingestellt, ob ein Sauggerät an dem Elektrowerkzeuggerät angeschlossen vorliegt oder nicht. Das Verfahren kann dann die Verfahrensschritte "Prüfung, ob ein Sauggerät an dem Elektrowerkzeuggerät angeschlossen vorliegt" und "Einstellung einer Drehrichtung des Werkzeugs des Elektrowerkzeuggeräts in Abhängigkeit von der Erkennung eines Sauggeräts am Elektrowerkzeuggerät" umfassen. Das Verfahren kann darüber hinaus den Verfahrensschritt der Anordnung eines Saugschlauchanschlusses oder einer Absaugvorrichtung in Abhängigkeit von einer Drehrichtung des Werkzeugs des Elektrowerkzeuggeräts oder in Abhängigkeit von einer Arbeitsrichtung des Elektrowerkzeuggeräts umfassen. Dabei wird die Position des Saugschlauchanschlusses oder der Absaugvorrichtung so an die Drehrichtung des Werkzeugs bzw. die Arbeitsrichtung des Elektrowerkzeuggeräts angepasst, dass die Staubabsaugung optimal auf den Betrieb des Elektrowerkzeuggeräts eingestellt wird, so dass eine bedarfsoptimierte, effiziente Staubabsaugung bereitgestellt werden kann.

Es ist im Sinne der Erfindung ganz besonders bevorzugt, dass sich das Werkzeug des Elektrowerkzeuggeräts im Uhrzeigersinn dreht, wenn ein Sauggerät an dem Elektrowerkzeuggerät angeschlossen vorliegt und wobei sich das Werkzeug des Elektrowerkzeuggeräts gegen den Uhrzeigersinn dreht, wenn kein Sauggerät an dem Elektrowerkzeuggerät angeschlossen vorliegt.

Es ist im Sinne der Erfindung ferner bevorzugt, dass die Drehrichtung des Werkzeugs des Elektrowerkzeuggeräts mit Anzeigenmitteln für die Drehrichtung angezeigt wird. Das bedeutet im Sinne der Erfindung bevorzugt, dass das Elektrowerkzeuggerät solche Anzeigenmittel umfasst, mit denen die Drehrichtung des Werkzeugs des Elektrowerkzeuggeräts - vorzugsweise gut sichtbar für den Nutzer des Elektrowerkzeuggeräts - angezeigt werden kann. Als Anzeigenmittel kann beispielsweise eine Leuchtdiode bzw. eine LED verwendet werden, um die aktuelle Drehrichtung des Werkzeugs für den Nutzer anzuzeigen, damit sich der Nutzer bei der Arbeit auf die jeweilige Drehrichtung einstellen kann. Denkbar ist auch ein kleiner Bildschirm oder eine sonstige Anzeige. Die Anzeige der Drehrichtung des Werkzeugs des Elektrowerkzeuggeräts ist insbesondere deswegen wichtig und stellt einen wesentlichen Vorteil der Erfindung für den Nutzer dar, weil sich je nach Drehrichtung die Anwenderkräfte erheblich ändern können. Für den Anwender ist es beispielsweise besonders wichtig zu wissen, wie das Elektrowerkzeuggerät bei einer möglichen Klemmung des Werkzeugs reagieren wird. Damit kann sich der Nutzer des Elektrowerkzeuggeräts deutlich besser auf einen Kickback vorbereiten als bei solchen Elektrowerkzeuggeräten, bei denen keine Anzeige der Werkzeug-Drehrichtung erfolgt.

Es ist im Sinne der Erfindung bevorzugt, dass das Elektrowerkzeuggerät einen Motor umfasst, wobei der Motor ein bürstenloser Motor ist. Es stellt eine überraschende Innovation im Bereich der bürstenlosen Motoren dar, dass Elektrowerkzeuge bereitgestellt werden können, bei denen die Drehrichtung des rotierenden Werkzeugs eingestellt werden kann. Die Einstellbarkeit der Drehrichtung des Elektrowerkzeugs bei Verwendung eines bürstenlosen Motors ist mit dem Vorteil verbunden, dass weder ein Getriebe für die Änderung der Drehrichtung, wie bei einem Verbrennungsmotor, erforderlich ist, noch eine Mechanik zur Umschaltung der Kommutierung, wie bei einem Bürstenmotor. Dadurch kann ein besonders nutzerfreundliches und flexibel einsetzbares Elektrowerkzeug bereitgestellt werden.

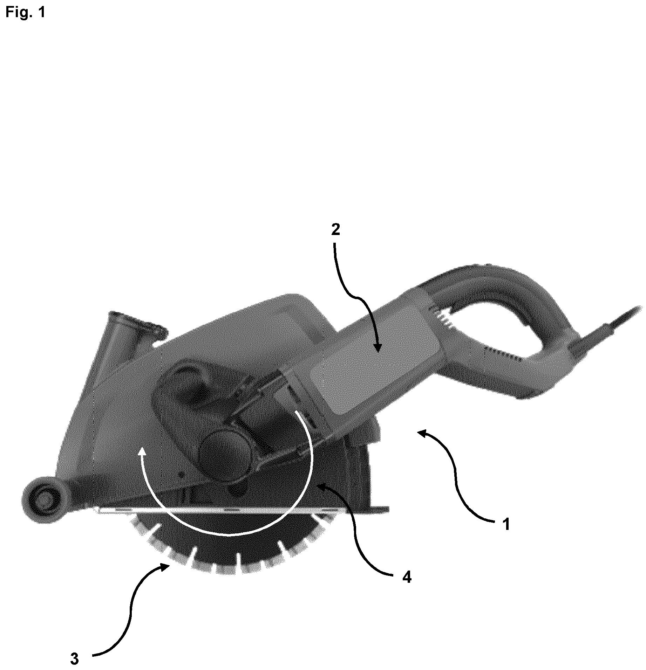

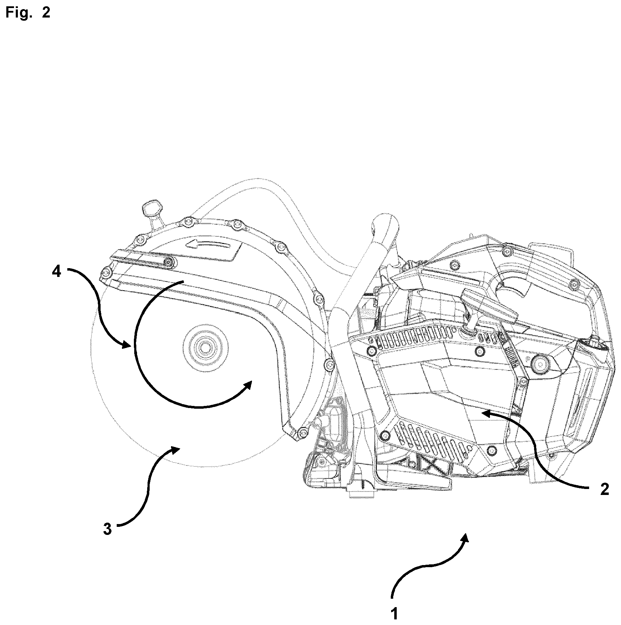

Der Begriff der "Einstellbarkeit der Drehrichtung des Elektrowerkzeugs" bedeutet im Sinne der Erfindung bevorzugt, dass eine Drehrichtung des Werkzeugs des Elektrowerkzeuggeräts in Abhängigkeit von den Erfordernissen der zu erledigenden Aufgabe eingestellt werden kann. Beispielsweise kann eine Drehrichtung "mit dem oder im Uhrzeigersinn" eingestellt werden. Für andere Anwendungsfälle kann es bevorzugt sein, dass die Rotationsrichtung "gegen den Uhrzeigersinn" eingestellt wird. Die Einstellbarkeit der Drehrichtung des Elektrowerkzeugs bedeutet im Sinne der Erfindung bevorzugt, dass zwischen den beiden entgegengesetzten Drehrichtungen "mit dem Uhrzeigersinn" und "gegen den Uhrzeigersinn" hin- und hergeschaltet werden kann, je nach Belieben des Nutzers des Elektrowerkzeuggeräts. Ein Beispiel für eine Rotationsrichtung "mit dem Uhrzeigersinn" ist in Fig. 1 dargestellt. Ein Beispiel für eine Rotationsrichtung "gegen den Uhrzeigersinn" ist in Fig. 2 dargestellt, wobei die Drehrichtung jeweils durch den kreisförmigen Pfeil angedeutet wird.

Das Umschalten kann beispielsweise durch das Einstellen eines Schalters bewirkt werden. Diese Einstellung kann zum Beispiel mechanisch erfolgen. Es kann im Sinne der Erfindung auch bevorzugt sein, dass die Einstellung über geänderte "settings" mittels einer Kommunikationsverbindung an das Elektrowerkzeuggerät übertragen werden. Das Ändern von Einstellungen ("settings") kann im Sinne der Erfindung als Betätigung eines Schalters verstanden werden. Der Schalter kann von einer Steuerungseinheit bzw. der Leistungelektronik des Elektrowerkzeuggeräts abgefragt werden. Es kann im Sinne der Erfindung auch bevorzugt sein, dass je nach Schalterstellung die Steuerungssoftware für die Ansteuerung des Motors entsprechend gewählt wird.

Es ist im Sinne der Erfindung bevorzugt, dass das Elektrowerkzeuggerät eine Elektronik zur Einstellung der Drehrichtung des Werkzeugs des Elektrowerkzeuggeräts umfasst. Ganz besonders bevorzugt ist es im Kontext der Erfindung, dass sich das Werkzeug des Elektrowerkzeuggeräts im Uhrzeigersinn dreht, wenn ein Sauggerät an dem Elektrowerkzeuggerät angeschlossen vorliegt, während sich das Werkzeug des Elektrowerkzeuggeräts gegen den Uhrzeigersinn dreht, wenn kein Sauggerät an dem Elektrowerkzeuggerät angeschlossen vorliegt. Die Erfassungsmittel, mit denen das Vorhandensein des Sauggeräts erfasst werden kann, können beispielsweise Bestandteil der Elektronik des Elektrowerkzeuggeräts sein. Die Erfassungsmittel können alternativ mit der Elektronik verbunden oder kommunizierend vorliegen, wobei die Verbindung und/oder die Kommunikation drahtbehaftet oder drahtlos ausgestaltet sein kann. Es kann im Sinne der Erfindung auch bevorzugt sein, dass die Funktion der Erfassung des Sauggeräts bzw. seines Anschlusses von der Elektronik des Elektrowerkzeuggeräts ausgeführt bzw. übernommen wird.

Tests haben gezeigt, dass die Rotationsrichtung "im Uhrzeigersinn" besonders bevorzugt ist bei einer Anwendung des Elektrowerkzeuggeräts in Verbindung mit einer Staubabsaugung. Bei der Drehrichtung des Werkzeugs des Elektrowerkzeuggeräts "mit dem Uhrzeigersinn" dreht sich das Werkzeug in einem vorderen Bereich des Geräts vorzugsweise vom zu bearbeitenden Untergrund bzw. vom Nutzer des Elektrowerkzeuggeräts weg. Dadurch kann das zerkleinerte Schneidgut einen Bewegungsimpuls vom Nutzer weg erhalten, so dass der Nutzer durch die Rotationsrichtung des Werkzeugs des Elektrowerkzeuggeräts von vornherein einer verringerten Staubexposition ausgesetzt ist, wenn das Elektrowerkzeuggerät in der Rotationsrichtung "im Uhrzeigersinn" betrieben wird. Es kann im Sinne der Erfindung auch bevorzugt sein, dass das Schneidgut vom bevorzugt glatten Untergrund weg befördert wird. Dadurch wird vorteilhafterweise die Voraussetzung für eine verbesserte und vollständigere Absaugung geschaffen. Es ist im Sinne der Erfindung ganz besonders bevorzugt, dass das Elektrowerkzeuggerät mit einer Staubhaube zusammenwirkt, die dazu eingerichtet ist, dass beim Trennen oder Bearbeiten des Untergrundes erzeugte Schneidgut abzusaugen und beispielsweise aus einem Atembereich des Nutzers des Elektrowerkzeuggeräts zu entfernen.

Bei der Rotationsrichtung "gegen den Uhrzeigersinn" ist es im Sinne der Erfindung bevorzugt, dass sich das Werkzeug an dem zu bearbeitenden Untergrund in Richtung des Nutzers des Elektrowerkzeuggeräts dreht. Es ist im Sinne der Erfindung bevorzugt, dass die Drehrichtung des Werkzeuges die Bewegungsrichtung des Anwenders unterstützt. Tests haben gezeigt, dass diese einstellbare Drehrichtung des Werkzeugs bzw. des Elektrowerkzeuggeräts besonders vorteilhaft ist für Anwendungen, die vom Nutzer als sehr belastend wahrgenommen werden. Die Belastung kann beispielsweise dadurch hervorgerufen werden, dass mit einer großen Kraft gearbeitet oder dass eine zeitintensive, langandauernde Arbeit durchgeführt werden muss. Insofern ermöglicht ein Betrieb des Elektrowerkzeuggeräts in der Rotationsrichtung "gegen den Uhrzeigersinn" eine besonders komfortable und für den Nutzer körperlich wenig belastende Arbeit mit dem Elektrowerkzeuggerät. Indem mit der vorliegenden Erfindung eine Einstellbarkeit der Drehrichtung des Werkzeugs des Elektrowerkzeugs ermöglicht wird, kann der Nutzer des Elektrowerkzeuggeräts je nach Anwendungsfall die optimale Rotationsrichtung des Werkzeugs am Elektrowerkzeuggerät einstellen und so vorteilhafterweise besonders staubarm oder mit reduzierter körperlicher Belastung arbeiten.

Es ist im Sinne der Erfindung bevorzugt, dass eine Kühlung des Elektrowerkzeuggeräts im Wesentlichen drehrichtungsunabhängig ausgebildet ist. Mit anderen Worten ist es im Sinne der Erfindung bevorzugt, dass die Kühlung des Elektrowerkzeuggeräts unabhängig von der Rotationsrichtung des Werkzeugs des Elektrowerkzeuggeräts arbeitet und eine Funktionsweise der Kühlung von einem Umschalten der Drehrichtung des Werkzeugs nicht beeinflusst wird. Vorzugsweise ist die Kühlung des Elektrowerkzeuggeräts insbesondere dazu eingerichtet, Komponenten des Elektrowerkzeuggeräts, wie Motor und/oder Leistungselektronik, vor einer Überhitzung zu schützen. Vorzugsweise wird im Kontext der Kühlung des Elektrowerkzeuggeräts ein Fluid an den zu kühlenden Komponenten des Elektrowerkzeuggeräts vorbeigeführt. Bei dem Fluid kann es sich vorzugsweise um ein wasserbasiertes Fluid oder ein Gasgemisch, wie Luft, handeln. Vorzugsweise wird das Fluid in geeigneten Rohren oder Kanälen an den zu kühlenden Komponenten des Elektrowerkzeuggeräts vorbeigeführt, wobei es bedingt durch den Temperaturunterschied zwischen den zu kühlenden Komponenten und dem Kühlfluid zu einem Wärmeaustausch von Motor und/oder Leitungselektronik in Richtung des Kühlfluids kommt. Es war vollkommen überraschend, dass im Kontext der vorliegenden Erfindung auch eine drehrichtungsunabhängige Kühlung des Elektrowerkzeuggeräts bereitgestellt werden kann.

Die Bereitstellung der im Wesentlichen drehrichtungsunabhängigen Kühlung für den Motor des Elektrowerkzeuggeräts kann beispielsweise dadurch ermöglicht werden, dass im Bereich der Kühlung des Elektrowerkzeuggeräts ein Lüfter verwendet wird, der vorzugsweise keine Vorzugsrichtung aufweist. Das bedeutet im Sinne der Erfindung bevorzugt, dass die Elemente auf dem Lüfterrad, die der Führung des Kühlungsfluids dienen, von gerade Rippen gebildet werden können. Gerade Kühlungsrippen geben - anders als gebogene Kühlungsrippen - das Kühlungsfluid nicht in eine bevorzugte Richtung ab, sondern in einer im Wesentlichen radialen Richtung. Dadurch kann die im Kontext des vorgeschlagenen Elektrowerkzeuggeräts vorgeschlagene Kühlung bei Verwendung eines Lüfterrads ohne Vorzugsrichtung im Wesentlichen drehrichtungsunabhängig ausgebildet sein, da auf diese Weise in beiden Betriebsrichtungen des Werkzeugs eine umfassende Kühlung des Motors des Elektrowerkzeuggeräts gewährleistet werden kann. Es kann im Sinne der Erfindung bevorzugt sein, dass diese Kühlleistung für beide Rotationsrichtungen des Werkzeugs im Wesentlichen 100 % beträgt. Es kann aber auch bevorzugt sein, dass an der Kühlung eine Kühlleistung eingestellt werden kann, die kleiner als 100 % ist. Mit anderen Worten ist es im Sinne der Erfindung bevorzugt, dass an der Kühlung des Elektrowerkzeuggeräts unterschiedliche Kühlleistungen eingestellt werden können, insbesondere in Abhängigkeit von der Rotationsrichtung des Werkzeugs des Elektrowerkzeuggeräts. Dies kann in den Fällen von Vorteil sein, wenn eine erste Betriebsart des Elektrowerkzeuggeräts eine geringere Kühlleistung erfordert als eine zweite Betriebsart des Elektrowerkzeugs. Eine Kühlleistung von weniger als 100 % kann beispielsweise dadurch bereitgestellt werden, dass im Bereich der Kühlung des Elektrowerkzeuggeräts ein Lüfter verwendet wird, der eine nur leicht ausgeprägte Vorzugsrichtung aufweist. Dadurch kann die Kühlung in der Vorzugsrichtung, wenn das Werkzeug des Elektrogeräts beispielsweise in einer ersten Rotationsrichtung betrieben wird, eine 100 %-ige Kühlleistung erreichen und in der Nicht-Vorzugsrichtung eine geringere Kühlleistung, die aber ausreichend ist, um eine Kühlung des Elektrogeräts zu erreichen, wenn das Werkzeug des Elektrogeräts beispielsweise in einer zweiten Rotationsrichtung betrieben wird. Auch eine so an die Erfordernisse angepasste Kühlung soll im Sinne der Erfindung ebenfalls unter den Begriff der "im Wesentlichen drehrichtungsunabhängigen Kühlung" des Elektrogeräts fallen.

Es ist im Sinne der Erfindung bevorzugt, dass das Elektrowerkzeuggerät eine Drehrichtungsanzeige umfasst. Mit anderen Worten umfasst das Elektrowerkzeuggerät vorzugsweise ein Anzeigenmittel für die Drehrichtung des Werkzeugs des Elektrowerkzeuggeräts. Bei dem Anzeigenmittel kann es sich beispielsweise um ein kleines Display, einen Bildschirm oder einen Monitor handeln. Vorzugsweise kann das Anzeigenmittel als Touchbildschirm oder Touchscreen ausgestaltet sein, so dass Eingaben vorteilhafterweise durch Berührung mit einem Finger des Nutzers oder mit einem speziellen Stift vorgenommen werden können. Die Anzeigenmittel können beispielsweise auch Lämpchen oder LEDs umfassen, die beispielsweise unterschiedlich gefärbt sind. Beispielsweise kann eine LED in Farbe A die Rotationsrichtung "gegen den Uhrzeigersinn" anzeigen, während eine LED in Farbe B die Rotationsrichtung "mit dem Uhrzeigersinn" angibt.

Es ist im Sinne der Erfindung ganz besonders bevorzugt, dass das Elektrowerkzeuggerät ein Trennschleifer, ein Diamanttrennschleifer oder ein Winkelschleifer ist. Insofern betrifft die Erfindung insbesondere Trennschleifer, Diamanttrennschleifer oder Winkelschleifer, bei denen in Abkehr vom Stand der Technik die Drehrichtung des Werkzeugs je nach Erfordernis der zu erledigenden Arbeit umgeschaltet werden kann, wobei der Motor des Elektrowerkzeuggeräts ein bürstenloser Motor ist. Vorzugsweise kann im Kontext der vorliegenden Erfindung zwischen den Drehrichtungen "im Uhrzeigersinn" und "gegen den Uhrzeigersinn" gewählt werden. Dazu kann das Elektrowerkzeuggerät beispielsweise eine Schaltervorrichtung umfassen. Dabei kann es sich beispielsweise um einen Kipp- oder einen Schiebeschalter handeln, der vorzugsweise zwei Schaltstellungen ermöglicht. Vorzugsweise entspricht je eine Schalterstellung einer Drehrichtung des Elektrowerkzeuggeräts.

In einem Ausführungsbeispiel betrifft die Erfindung einen Trenn- oder Winkelschleifer, wobei der Antrieb vorzugsweise mit einem bürstenlosen Motor realisiert wird. Das Werkzeug des Trenn- oder Winkelschleifer ist vorzugsweise mit einer automatisch einstellbaren Drehrichtung ausgestattet, so dass eine Rotationsrichtung der Trennscheibe bzw. des Trennblattes am Elektrowerkzeuggerät ohne Zutun des Nutzers eingestellt wird. Dadurch kann vorteilhafterweise ein besonders einfach zu konfigurierender Trenn- oder Winkelschleifer bereitgestellt werden, der aufgrund seiner einstellbaren Werkzeug-Rotationsrichtung besonders nutzerfreundlich ist. Es hat sich gezeigt, dass mit einem Elektrowerkzeuggerät, dessen Werkzeug mit dem Uhrzeigersinn rotiert, eine besonders gute Absaugung des Schneidgutes in Verbindung mit einer entsprechenden Staubhaube für die Absaugung erreicht werden kann. Dazu kann das Elektrowerkzeuggerät bzw. die Staubhaube beispielsweise mit einem Staubsauger oder einem Entstauber verbunden werden. Ferner hat sich gezeigt, dass ein Elektrowerkzeuggerät, dessen Werkzeug gegen den Uhrzeigersinn rotiert, zu einer überraschend geringen Ermüdung des Anwenders führt. Mit anderen Worten kann mit der Erfindung die körperliche Belastung für den Nutzer des Elektrowerkzeuggeräts erheblich reduziert werden, wenn das Werkzeug des Trenn- oder Winkelschleifers gegen den Uhrzeigersinn betrieben wird. Ein weiterer Vorteil der Erfindung besteht darin, dass die Drehrichtung des Werkzeugs des Elektrowerkzeuggeräts insbesondere wählbar ist in Abhängigkeit von der Zugänglichkeit des Untergrundes bzw. des Trennguts.

Es ist im Sinne der Erfindung bevorzugt, dass bei einem bürstenlosen Motor die Drehrichtung des Werkzeugs mit Hilfe einer Softwaresteuerung geändert werden kann. Dabei wird die Drehrichtung des Werkzeugs des Elektrowerkzeuggeräts automatisch eingestellt, d.h. insbesondere ohne Zutun des Nutzers des Elektrowerkzeuggeräts. Dabei ist es im Sinne der Erfindung bevorzugt, dass für beide Drehrichtungen des Motors eine ausreichend große Kühlung der Gerätekomponenten ermöglicht wird. Vorzugsweise kann ein bürstenloser Motor mit Netzbetrieb oder auch mit ein oder mehreren Batterien und/oder Akkumulatoren ("Akkus") betrieben werden.

Für die automatische Einstellung der Werkzeugdrehrichtung durch das Elektrowerkzeuggerät ist in einer bevorzugten Ausgestaltung der Erfindung eine geeignete sensorische Detektion des Anschlusses eines Saugschlauchs vorgesehen. Wenn der Saugschlauchanschluss beispielsweise mit einer Klappe oder einem Deckel verschlossen sein kann, kann beispielsweise durch einen Mikroschalter detektiert werden, ob die Klappe oder geschlossen ist. Eine geöffnete Klappe wird im Sinne der Erfindung so interpretiert, dass ein Saugschlauch angeschlossen, d.h. ein Sauggerät vorhanden ist. Eine geschlossene Klappe wird im Sinne der Erfindung so interpretiert, dass kein Saugschlauch angeschlossen, d.h. kein Sauggerät vorhanden ist. Es ist im Sinne der Erfindung bevorzugt, dass das Elektrowerkzeuggerät dazu eingerichtet ist, in Abhängigkeit von dieser Information, die Drehrichtung des Werkzeugs entsprechend einzustellen. Dazu kann insbesondere eine Elektronik oder eine Steuervorrichtung des Elektrowerkzeuggeräts verwendet werden. Insbesondere wird bei nicht angeschlossenem Saugschlauch die Drehrichtung "gegen den Uhrzeigersinn" eingestellt, während bei angeschlossenem Saugschlauch die Drehrichtung "im Uhrzeigersinn" eingestellt wird.

Wesentliche Vorteile der Erfindung bestehen darin, dass die Drehrichtung des Werkzeugs des Elektrowerkzeuggeräts optimal an eine Anwendung des Elektrowerkzeuggeräts angepasst werden kann. Ferner kann mit der Erfindung die Realisierung der Staubabsaugung des Elektrowerkzeuggeräts an die Drehrichtung in oder gegen den Uhrzeigersinn angepasst werden. Dadurch kann ein wesentlich verbesserter Absauggrad erreicht werden. Darüber hinaus kann ein zusätzlicher Tiefenanschlag vorgesehen sein, mit dem ein im Wesentlichen staubfreies Arbeiten im Innenbereich realisiert werden.

Für ablängende Anwendungen des Elektrowerkzeuggeräts kann beispielsweise die vom Anwender bevorzugt angewendete ziehende Arbeitsrichtung realisiert werden, wenn dabei eine Staubabsaugung nicht notwendig ist. Bei der Absaugung im vorderen Bereich der Schutz- oder Staubhaube kann der Saugschlauchanschluss sehr einfach in die Schutz- oder Staubhaube integriert werden. Dies hat den Vorteil, dass der Anwender keine Montage und Demontage einer zusätzlichen Absaugeinrichtung durchführen muss. Die Absaugvorrichtung kann somit auch nicht auf der Baustelle verloren gehen. Bei Anwendungswechsel mit oder ohne Absaugung ist nur der Verschluss bzw. die Öffnung des Saugschlauchanschusses an der Haube erforderlich. Die Absaugvorrichtung kann vorteilhafterweise mit nahezu allen gängigen baustellengeeigneten Sauggeräten, wie Staubsaugern oder Entstaubern, betrieben werden.

Bei Elektrowerkzeuggeräten, beispielsweise einem Trennschleifer, bei denen die Staubabsaugung als separate Zubehörvorrichtung ausgestaltet ist, kann die Drehrichtung automatisch angepasst werden, wenn das Zubehör montiert ist, zum Beispiel mit einem Magneten am Zubehör oder mit einem Hall-Sensor an einem Blattschutz des Werkzeugs des Elektrowerkzeuggeräts. Es ist darüber hinaus denkbar, neben der Drehrichtung auch weitere Arbeitsparameter, wie Drehzahl, Moment und dergleichen zur Optimierung der Staubabsaugung zu ändern. Das vorgeschlagene Elektrowerkzeuggerät ist darüber hinaus durch folgende Merkmale zur Erkennung eines Sauggeräts und zur automatischen Änderung bzw. Einstellung einer Drehrichtung des Werkzeugs eines Elektrowerkzeuggeräts ausgebildet:
Um beide Drehrichtungen in einem Trennschleifer zu ermöglichen sind folgende Punkte in der Gerätekonfiguration zu berücksichtigen:
- Der Motorlüfter ist vorzugsweise symmetrisch für beide Drehrichtungen geeignet.
- Das Werkzeug ist vorzugsweise für die Verwendung in beiden Drehrichtungen geeignet. Wenn es sich bei dem Elektrowerkzeuggerät um einen Trennschleifer handelt, betrifft dies insbesondere die Trenn- oder Schneidscheiben, die insbesondere auch mit Diamanten besetzt sein können, um die Schneidleistung zu verbessern.
- Das Getriebe des Elektrowerkzeuggeräts weist vorzugsweise eine gerade Getriebeverzahnung auf, welche ebenfalls für beide Drehrichtungen geeignet ist.
- Das Elektrowerkzeuggerät weist vorzugsweise einen elektronisch kommutierten Motor auf, der für beide Drehrichtungen geeignet ist.
- Die Werkzeugbefestigung ist vorzugsweise für beide Drehrichtungen des Werkzeugs geeignet. Das bedeutet im Sinne der Erfindung insbesondere, dass kein Losdrehen der Werkzeugbefestigung in beiden Drehrichtungen erfolgt. Mit anderen Worten: Das Werkzeug löst sich nicht unerwünschterweise vom Elektrowerkzeuggerät, unabhängig davon, in welcher Drehrichtung das Elektrowerkzeuggerät betrieben wird.

Weitere Vorteile der Erfindung ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: Ansicht einer bevorzugten Ausführungsform des Elektrowerkzeuggeräts
- Fig. 2: Ansicht einer weiteren bevorzugten Ausführungsform des Elektrowerkzeuggeräts
- Fig. 3: Ansicht einer bevorzugten Ausführungsform eines Lüfterrads für die drehrichtungsunabhängige Kühlung
- Fig. 4: Ansicht einer bevorzugten Ausführungsform des Elektrowerkzeuggeräts, bei der sich das Werkzeug gegen den Uhrzeigersinn dreht
- Fig. 5: Ansicht einer bevorzugten Ausführungsform des Elektrowerkzeuggeräts, bei der sich das Werkzeug gegen den Uhrzeigersinn dreht, in ziehender Arbeitsrichtung
- Fig. 6: Ansicht einer bevorzugten Ausführungsform des Elektrowerkzeuggeräts, bei der sich das Werkzeug im Uhrzeigersinn dreht
- Fig. 7: Ansicht einer bevorzugten Ausführungsform des Elektrowerkzeuggeräts, bei der sich das Werkzeug im Uhrzeigersinn dreht, in schiebender Arbeitsrichtung

### Figurenbeschreibung und Ausführungsbeispiel:

Fig. 1 zeigt ein vorgeschlagenes Elektrowerkzeuggerät (1) mit einem Motor (2) und einem rotierenden Werkzeug (3). Es ist im Sinne der Erfindung ganz besonders bevorzugt, dass es sich beim dem Elektrowerkzeuggerät (1) um einen Trennschleifer, einen Diamanttrennschleifer oder einen Winkelschleifer handelt. Eine Drehrichtung (4) des Werkzeugs (3) kann an dem Elektrowerkzeuggerät (1) eingestellt werden. Der Motor (3) ist ein bürstenloser Motor. Das Elektrowerkzeuggerät (1), das in Fig. 1 abgebildet wird, ist ein Trennschleifer, dessen Trennscheibe (3) sich im Uhrzeigersinn dreht. Dadurch kann Staub oder Schneidgut, das beim Trenn- bzw. Schneidprozess entsteht, so aus dem Arbeitsbereich des Werkzeugs (3) abgeführt werden, dass es vom Nutzer des Elektrowerkzeuggeräts (1) wegbewegt bzw. abtransportiert wird. Das Elektrowerkzeuggerät (1) kann eine Staubhaube umfassen, die vorzugsweise das rotierende Werkzeug (3) umgibt und die vorzugsweise dazu eingerichtet ist, beispielsweise in Verbindung mit einer Staubabsaugvorrichtung, den Staub oder das Schneidgut abzusaugen. Dadurch wird vorteilhafterweise verhindert, dass der Staub vom Nutzer eingeatmet wird und in seine Atemwege gelangt, wo er zu gesundheitlichen Beeinträchtigungen führen kann.

In einer bevorzugten Ausführungsform der Erfindung kann das Elektrowerkzeuggerät (1) eine Kühlung (nicht dargestellt) umfassen. Die Kühlung des Elektrowerkzeuggeräts (1) ist vorzugsweise drehrichtungsunabhängig ausgebildet. Mit anderen Worten kann die Kühlung des Elektrowerkzeuggeräts (1) so ausgebildet sein, dass sie unabhängig von der Rotationsrichtung (4) des Werkzeugs (3) des Elektrowerkzeuggeräts (1) betrieben werden kann. Die Kühlung des Elektrowerkzeuggeräts (1) ist vorzugsweise dazu eingerichtet, solche Komponenten des Elektrowerkzeugs (1) vor einem unerwünschten Überhitzen zu schützen, die besonders relevant für den Betrieb des Elektrowerkzeuggeräts (1) sind, wie zum Beispiel der Motor (2) oder die Leistungselektronik (nicht dargestellt).

In einer bevorzugten Ausführungsform der Erfindung kann das Elektrowerkzeuggerät (1) ein Anzeigenmittel für die Drehrichtung (4) (6) umfassen. Es ist mit anderen Worten im Sinne der Erfindung bevorzugt, dass das Elektrowerkzeuggerät (1) eine Drehrichtungsanzeige (6) umfasst. Mit dieser Dreh- oder Rotationsrichtungsanzeige (6) kann am Elektrowerkzeuggerät angezeigt werden, welche Drehrichtung (4) des Werkzeugs (3) gerade eingestellt ist. Vorzugsweise befindet sich das Anzeigenmittel (6) an einer Stelle am Elektrowerkzeuggerät (1), die gut für dessen Nutzer einsehbar ist.

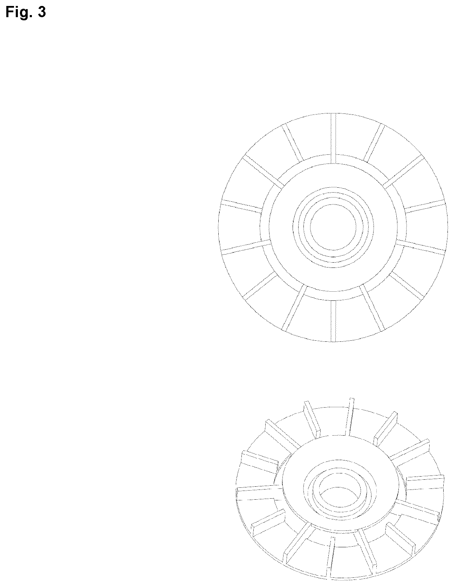

Fig. 3 zeigt eine bevorzugte Ausführungsform eines Lüfterrads für die im Wesentlichen drehrichtungsunabhängige Kühlung. Dabei sind Kühlungsrippen zu sehen, die vorzugsweise radial von einem Mittelpunkt der Lüfterradscheibe nach außen führen. Das in Fig. 3 dargestellte Lüfterrad mit vorzugsweise radial verlaufenden, gerade ausgebildeten Kühlrippen weist vorteilhaftweise keine Vorzugsrichtung beim Transport eines Kühlfluids auf. Dadurch ermöglicht ein Lüfterrad, wie beispielhaft in Fig. 3 dargestellt, dass eine Kühlung innerhalb des Elektrowerkzeuggeräts (1) bereitgestellt werden kann, die für beide Rotationsrichtungen (4) des Werkzeugs (3) des Elektrowerkzeuggeräts (1) verwendet werden kann.

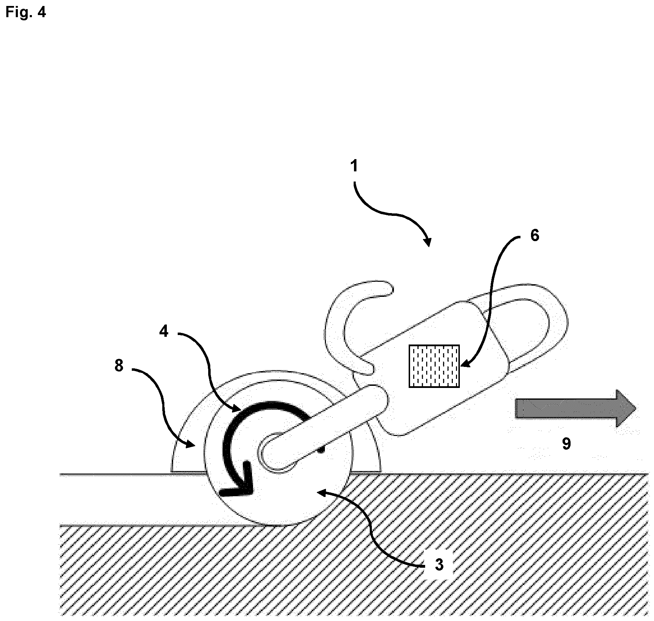

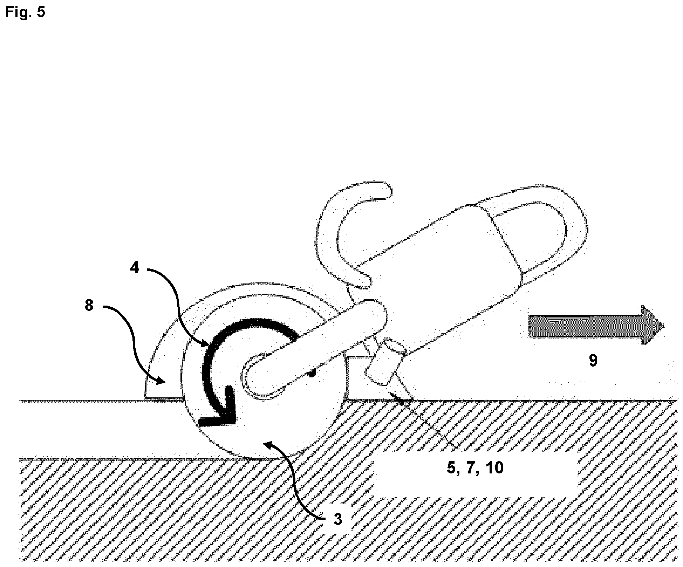

Fig. 4 zeigt ein Elektrowerkzeuggerät (1), dessen Werkzeug (3) sich entgegen des Uhrzeigersinns dreht. Die bevorzugte Arbeitsrichtung eines solchen Elektrowerkzeuggeräts (1), bei dem sich das Werkzeug (3) gegen den Uhrzeigersinn dreht, ist die "ziehende" Arbeitsrichtung (9). Das bedeutet im Sinne der Erfindung bevorzugt, dass das Elektrowerkzeuggerät (1) - in Fig. 4 beispielhaft ein Trennschleifer - in Richtung des Anwenders bei der Anwendung gezogen wird. Dadurch soll ein sogenannter Kickback verhindert werden, d.h. ein schneller Rückschlag des Geräts (1) beim plötzlichen Verkannten im Untergrund, was insbesondere bei schiebenden Anwendungen beobachtet wird. Bei Elektrowerkzeuggeräten (1), die aufgrund der Drehrichtung (4) ihres Werkzeugs (3) insbesondere in ziehender Arbeitsrichtung (9) verwendet werden, ist es insbesondere bevorzugt, dass ein Saugschlauchanschluss (7) einer Staubhaube (8) insbesondere an einem geräteseitigen Ende der Schutzhaube (8) angeordnet vorliegt. Eine solche Anordnung eines Saugschlauchanschlusses (7) für eine Staubhaube (8) wird in Fig. 5 dargestellt. Bei dem in Fig. 5 dargestellten Ausführungsbeispiel des Elektrowerkzeuggeräts (1) liegt ein Saugschlauchanschluss (7) für eine Staubhaube (8) insbesondere am geräteseitigen Ende der Schutzhaube (8) vor. Der Saugschlauchanschluss (7) liegt vorzugsweise in Verbindung mit einer Absaugvorrichtung (10) vor. Dabei kann es sich bevorzugt um einen Adapter zwischen Staubhaube (8) und Saugschlauch handeln, um den Saugschlauch des Sauggeräts an der Staub- oder Schutzhaube (8) des Elektrowerkzeuggeräts (1) zu befestigen. Es ist im Sinne der Erfindung bevorzugt, dass die Erfassungsmittel (5) in einem Bereich des jeweiligen Anschlussrohrs für den Saugschlauch angeordnet vorliegen. Die Erfassungsmittel (5) können jedoch an vielen unterschiedlichen Positionen an dem Elektrowerkzeuggerät (1) angeordnet sein.

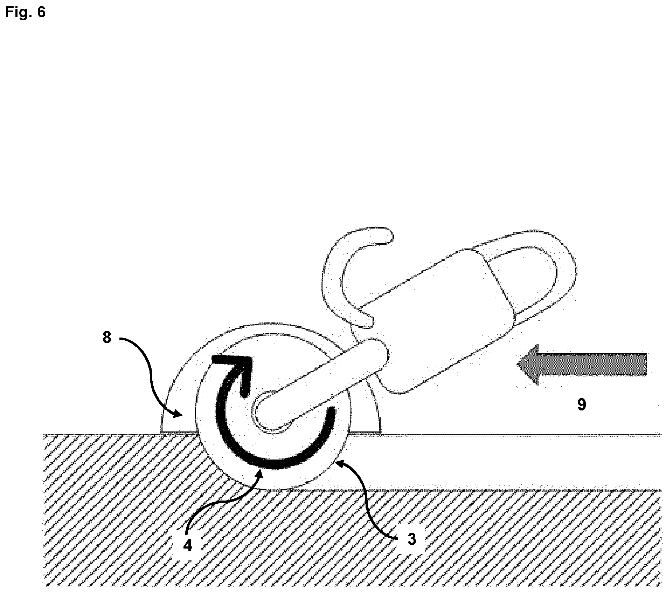

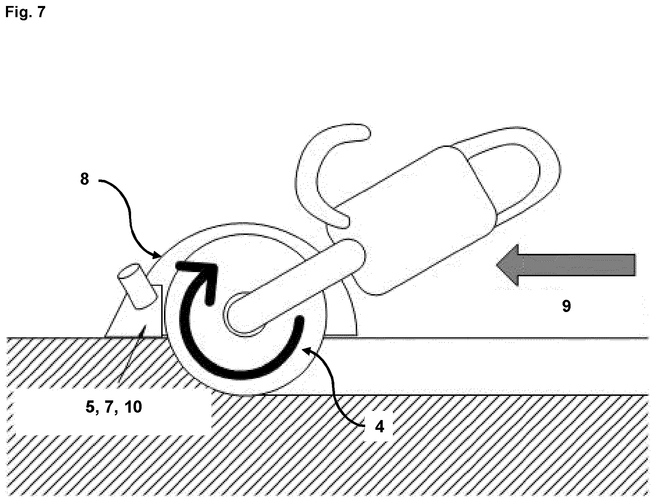

Die Fig. 6 und 7 zeigen analog zu den Fig. 4 und 5 Elektrogeräte (1), deren Werkzeuge (3) sich mit dem oder im Uhrzeigersinn drehen und die entsprechend in "schiebender" Arbeitsrichtung (9) betrieben werden. Bei dem in Fig. 7 dargestellten Elektrowerkzeuggerät (1) befindet sich daher ein Saugschlauchanschluss (7) für eine Staubhaube (8) oder eine Absaugvorrichtung (10) auf einer geräte-abgewandten Seite der Schutzhaube (8). Der Saugschlauchanschluss (7) eilt dem Elektrowerkzeuggerät (1) bei Betrieb des Elektrowerkzeuggeräts (1) in "schiebender" Arbeitsrichtung (9) somit voraus.

### Bezugszeichenliste

- 1: Elektrowerkzeuggerät, zum Beispiel ein Trennschleifer
- 2: Motor
- 3: Werkzeug
- 4: Drehrichtung
- 5: Erfassungsmittel
- 6: Anzeigenmittel für die Drehrichtung des Werkzeugs
- 7: Saugschlauchanschluss
- 8: Staub- oder Schutzhaube
- 9: Arbeitsrichtung des Elektrowerkzeuggeräts
- 10: Absaugvorrichtung

## Patentansprüche

1. Elektrowerkzeuggerät (1) mit einem rotierenden Werkzeug (3) wobei eine Drehrichtung (4) des Werkzeugs (3) an dem Elektrowerkzeuggerät (1) in Abhängigkeit von einem Betriebszustand des Elektrowerkzeuggeräts (1) automatisch eingestellt wird, **dadurch gekennzeichnet, dass** das Elektrowerkzeug (1) Mittel (5) zum Erkennen eines Sauggeräts umfasst und dass
der Betriebszustand angibt, ob ein Sauggerät an dem Elektrowerkzeuggerät (1) angeschlossen vorliegt.

2. Elektrowerkzeuggerät (1) nach Anspruch 1
**dadurch gekennzeichnet, dass**
das Elektrowerkzeuggerät (1) einen Motor (2) umfasst, wobei der Motor (2) ein bürstenloser Motor ist.

3. Elektrowerkzeuggerät (1) nach Anspruch 1 oder 2
**dadurch gekennzeichnet, dass**
eine Kühlung des Elektrowerkzeuggeräts (1) im Wesentlichen drehrichtungsunabhängig ausgebildet ist.

4. Elektrowerkzeuggerät (1) nach einem der vorhergehenden Ansprüche
**dadurch gekennzeichnet, dass**
das Elektrowerkzeuggerät (1) ein Anzeigenmittel (6) für die Drehrichtung (4) umfasst.

5. Elektrowerkzeuggerät (1) nach einem der vorhergehenden Ansprüche
**dadurch gekennzeichnet, dass**
das Elektrowerkzeuggerät (1) ein Trennschleifer, ein Diamanttrennschleifer oder ein Winkelschleifer ist.

6. Elektrowerkzeuggerät (1) nach Anspruch 5
**dadurch gekennzeichnet, dass**
die Mittel (5) zum Erkennen eines Sauggeräts von einem Mikroschalter, einem Magneten und/oder einem Hall-Sensor gebildet werden.

7. Elektrowerkzeuggerät (1) nach einem der vorhergehenden Ansprüche **dadurch gekennzeichnet, dass**
das Elektrowerkzeuggerät (1) eine Elektronik zur Einstellung der Drehrichtung (4) des Werkzeugs (3) des Elektrowerkzeuggeräts (1) umfasst.

8. Elektrowerkzeuggerät (1) nach einem der vorhergehenden Ansprüche **dadurch gekennzeichnet, dass**
sich das Werkzeug (3) des Elektrowerkzeuggeräts (1) im Uhrzeigersinn dreht, wenn ein Sauggerät an dem Elektrowerkzeuggerät (1) angeschlossen vorliegt und wobei sich das Werkzeug (3) des Elektrowerkzeuggeräts (1) gegen den Uhrzeigersinn dreht, wenn kein Sauggerät an dem Elektrowerkzeuggerät (1) angeschlossen vorliegt.

9. Elektrowerkzeuggerät (1) nach einem der vorhergehenden Ansprüche **dadurch gekennzeichnet, dass**
an dem Elektrowerkzeuggerät (1) ein Saugschlauchanschluss (7) und/oder eine Absaugvorrichtung (10) in Abhängigkeit von einer Drehrichtung (4) des Werkzeugs (3) des Elektrowerkzeuggeräts (1) und/oder in Abhängigkeit von einer Arbeitsrichtung (9) des Elektrowerkzeuggeräts (1) angeordnet ist.

10. Verfahren zum Betrieb eines Elektrowerkzeuggeräts (1) mit einem rotierenden Werkzeug (3), wobei das **Verfahren folgende Verfahrensschritte** umfasst:
a) Bereitstellung eines Elektrowerkzeuggeräts (1) mit einem rotierenden Werkzeug (3) nach einem der Ansprüche 1 bis 9,
b) Erfassung eines Betriebszustands des Elektrowerkzeuggeräts (1) mit Erfassungsmitteln (5),
c) automatische Einstellung einer Drehrichtung des Elektrowerkzeuggeräts (1) in Abhängigkeit von dem erfassten Betriebszustand des Elektrowerkzeuggeräts (1), wobei der Betriebszustand angibt, ob ein Sauggerät an dem Elektrowerkzeuggerät (1) angeschlossen vorliegt.

11. Verfahren nach Anspruch 10
**dadurch gekennzeichnet, dass**
die Drehrichtung (4) des Werkzeugs (3) des Elektrowerkzeuggeräts (1) mit Anzeigenmitteln (6) für die Drehrichtung (4) angezeigt wird.

## Claims

1. Electric power tool (1) having a rotating tool (3),
wherein
a direction of rotation (4) of the tool (3) on the electric power tool (1) is set automatically in dependence on an operating state of the electric power tool (1), **characterized in that** the electric tool (1) has means (5) for recognizing a suction device, and **in that** the operating state indicates whether a suction device is connected to the electric power tool (1).

2. Electric power tool (1) according to Claim 1,
**characterized in that**
the electric power tool (1) comprises a motor (2), the motor (2) being a brushless motor.

3. Electric power tool (1) according to Claim 1 or 2,
**characterized in that**
cooling of the electric power tool (1) is designed to be substantially independent of the direction of rotation.

4. Electric power tool (1) according to one of the preceding claims,
**characterized in that**
the electric power tool (1) comprises an indicating means (6) for the direction of rotation (4).

5. Electric power tool (1) according to one of the preceding claims,
**characterized in that**
the electric power tool (1) is a cut-off grinder, a diamond cut-off grinder or an angle grinder.

6. Electric power tool (1) according to Claim 5,
**characterized in that**
the means (5) for recognizing a suction device are formed by a microswitch, a magnet and/or a Hall sensor.

7. Electric power tool (1) according to one of the preceding claims,
**characterized in that**
the electric power tool (1) comprises electronics for setting the direction of rotation (4) of the tool (3) of the electric power tool (1).

8. Electric power tool (1) according to one of the preceding claims,
**characterized in that**
the tool (3) of the electric power tool (1) rotates clockwise when a suction device is connected to the electric power tool (1), and wherein the tool (3) of the electric power tool (1) rotates counterclockwise when no suction device is connected to the electric power tool (1).

9. Electric power tool (1) according to one of the preceding claims,
**characterized in that**
a suction hose connection (7) and/or a suction-extraction device (10) are/is arranged on the electric power tool (1) in dependence on a direction of rotation (4) of the tool (3) of the electric power tool (1) and/or in dependence on a working direction (9) of the electric power tool (1).

10. Method for operating an electric power tool (1) having a rotating tool (3), wherein the method comprises the following method steps:
a) provision of an electric power tool (1) having a rotating tool (3) according to one of Claims 1 to 9,
b) detection of an operating state of the electric power tool (1) with detection means (5),
c) automatic setting of a direction of rotation of the electric power tool (1) in dependence on the detected operating state of the electric power tool (1), wherein the operating state indicates whether a suction device is connected to the electric power tool (1).

11. Method according to Claim 10,
**characterized in that**
the direction of rotation (4) of the tool (3) of the electric power tool (1) is indicated by indicating means (6) for the direction of rotation (4).

## Revendications

1. Appareil-outil électrique (1) avec un outil rotatif (3)
dans lequel
une direction de rotation (4) de l'outil (3) sur l'appareil-outil électrique (1) est réglé automatiquement en fonction d'un état de fonctionnement de l'appareil-outil électrique (1), **caractérisé en ce que** l'outil électrique (1) comprend des moyens (5) pour détecter un appareil d'aspiration et **en ce que** l'état de fonctionnement indique si un appareil d'aspiration est raccordé à l'appareil-outil électrique (1).

2. Appareil-outil électrique (1) selon la revendication 1,
**caractérisé en ce que**
l'appareil-outil électrique (1) comprend un moteur (2), le moteur (2) étant un moteur sans balai.

3. Appareil-outil électrique (1) selon la revendication 1 ou 2,
**caractérisé en ce que**
un refroidissement de l'appareil-outil électrique (1) est réalisé essentiellement indépendamment de la direction de rotation.

4. Appareil-outil électrique (1) selon l'une quelconque des revendications précédentes, **caractérisé en ce que**
l'appareil-outil électrique (1) comprend un moyen d'indication (6) pour la direction de rotation (4).

5. Appareil-outil électrique (1) selon l'une quelconque des revendications précédentes, **caractérisé en ce que**
l'appareil-outil électrique (1) est une meuleuse à disque, une meuleuse à disque diamantée ou une meuleuse d'angle.

6. Appareil-outil électrique (1) selon la revendication 5,
**caractérisé en ce que**
les moyens (5) de détection d'un appareil d'aspiration sont formés par un microrupteur, un aimant et/ou un capteur à effet Hall.

7. Appareil-outil électrique (1) selon l'une quelconque des revendications précédentes, **caractérisé en ce que**
l'appareil-outil électrique (1) comprend une électronique pour le réglage de la direction de rotation (4) de l'outil (3) de l'appareil-outil électrique (1).

8. Appareil-outil électrique (1) selon l'une quelconque des revendications précédentes, **caractérisé en ce que**
l'outil (3) de l'appareil-outil électrique (1) tourne dans le sens des aiguilles d'une montre lorsqu'un appareil d'aspiration est raccordé à l'appareil-outil électrique (1) et dans lequel l'outil (3) de l'appareil-outil électrique (1) tourne dans le sens inverse des aiguilles d'une montre lorsqu'aucun appareil d'aspiration n'est raccordé à l'appareil-outil électrique (1).

9. Appareil-outil électrique (1) selon l'une quelconque des revendications précédentes, **caractérisé en ce que**
un raccord de tuyau d'aspiration (7) et/ou un dispositif d'aspiration (10) est agencé sur l'appareil-outil électrique (1), en fonction d'une direction de rotation (4) de l'outil (3) de l'appareil-outil électrique (1) et/ou en fonction d'une direction de travail (9) de l'appareil-outil électrique (1).

10. Procédé pour faire fonctionner un appareil-outil électrique (1) avec un outil rotatif (3), le procédé comprenant les étapes de procédé suivantes :
a) la fourniture d'un appareil-outil électrique (1) avec un outil rotatif (3) selon l'une quelconque des revendications 1 à 9,
b) la détection d'un état de fonctionnement de l'appareil-outil électrique (1) avec des moyens de détection (5),
c) le réglage automatique d'une direction de rotation de l'appareil-outil électrique (1) en fonction de l'état de fonctionnement détecté de l'appareil-outil électrique (1), l'état de fonctionnement indiquant si un appareil d'aspiration est raccordé à l'appareil-outil électrique (1).

11. Procédé selon la revendication 10,
**caractérisé en ce que**
la direction de rotation (4) de l'outil (3) de l'appareil-outil électrique (1) est indiqué par des moyens d'indication (6) pour la direction de rotation (4).
